# EUROPÄISCHE PATENTANMELDUNG

(11) **EP 3 312 249 A1**
(43) Veröffentlichungstag der Anmeldung: **25.04.2018**
(21) Anmeldenummer: 16195064.7
(22) Anmeldetag: 21.10.2016
(51) Int. Cl.: C09J 7/02, E04F 15/02, E04F 15/18, E04F 15/22

(54) **DOPPELSEITIG SELBSTKLEBENDE DAMPFBREMSE**

(71) Anmelder: Uzin Tyro AG, 6374 Buochs (CH)
(72) Erfinder: Wigger, Thomas, 6232 Geuensee (CH)
(74) Vertreter: Isarpatent

(57) **Zusammenfassung**

Die Erfindung betrifft eine doppelseitig selbstklebende Dampfbremse, umfassend mindestens eine Bremsschicht gegenüber Feuchtigkeit, eine Trägerfolie, eine erste Haftkleberschicht, welche gegenüber Feuchtigkeit beständig ist, eine zweite Haftkleberschicht, welche sich auf einer der ersten Haftkleberschicht gegenüberliegenden Seite der Trägerfolie befindet, und eine entfernbare Abdeckschicht, welche auf der zweiten Haftkleberschicht auf einer der Umgebung zugewandten Seite der selbstklebenden Dampfbremse gegenüber der Trägerfolie aufgebracht ist.

## Beschreibung

Die vorliegende Erfindung betrifft eine - doppelseitig - selbstklebende Dampfbremse, umfassend mindestens eine Bremsschicht gegenüber Feuchtigkeit, eine Trägerfolie, eine erste Haftkleberschicht, welche gegenüber Feuchtigkeit beständig ist, eine zweite Haftkleberschicht, welche sich auf einer der ersten Haftkleberschicht gegenüberliegenden Seite der Trägerfolie befindet, und eine entfernbare Abdeckschicht, welche auf der zweiten Haftkleberschicht auf einer der Umgebung zugewandten Seite der selbstklebenden Dampfbremse gegenüber der Trägerfolie aufgebracht ist. Darauf kann direkt ein elastischer oder textiler Bodenbelag aufgeklebt werden.

Für die Herstellung neuer Betonböden und Estriche werden erhebliche Mengen Wasser benötigt, um eine einbringbare Konsistenz zu erreichen. Ein großer Teil dieses Wassers muss nach dem Abbindeprozess verdunsten, bzw. abtrocknen, bevor weitere Schichten aufgebracht werden können oder bevor schlussendlich ein Bodenbelag aufgebracht werden kann. Die vollständige Austrocknung von Betonplatten benötigt viele Monate bis ca. 3 Jahre. Die vollständige Austrocknung von Estrichen benötigt je nach Dicke, Konstruktion, Zusammensetzung und vorliegendem Raumklima mehrere Wochen bis Monate. Um die nächsten Schichten auf den Boden aufbauen zu können, muss bevorzugt jeweils die Feuchte des Bodens, zum Beispiel eines Betonbodens oder eines Estrichs, unter ein vorgegebenes Maß abgetrocknet sein.

Um die Wartezeit weiter zu verkürzen, werden restfeuchte Estriche und/oder Betonböden mit zum Beispiel reaktiven Dampfbremsen versehen, zum Beispiel mit 2K(2-Komponenten)-Epoxy, 2K-PU (Polyurethan) oder allenfalls 1K-PU oder 1K-Silan Beschichtungen. Diese müssen je nach benötigter Bremswirkung in mehreren Schichten aufgetragen werden. Die letzte Schicht wird üblicherweise abgesandet. Nach dem Abkehren von losem Sand kann dann gespachtelt werden, und auf die ausgetrocknete Spachtelmasseschicht kann zum Beispiel mit einem Dispersionsklebstoff oder einem Reaktivklebstoff, zum Beispiel ein elastischer Bodenbelag oder ein Teppich geklebt werden.

Reaktive Dampfbremsen und Dampfsperrsysteme sind jedoch bei der Verarbeitung oft gesundheitlich bedenklich, da teilweise gesundheitsschädliche, reizende, toxische oder mutagene Vernetzer eingesetzt werden. Zudem werden gewöhnlich für jeden Schichtauftrag Trocknungszeiten von bis zu 24 h benötigt, um mit dem nächsten Arbeitsgang fortfahren zu können. Je nach eingesetzter Spachtelmasse müssen auch für die Spachtelmasseschicht mit weiteren 6 bis 20 Stunden Trocknungszeit gerechnet werden, um schlussendlich den Bodenbelag darauf kleben zu können.

Zwischen Betonplatte und Estrich werden oftmals Dampfbremsfolien lose verlegt, um den Estrich vor der Feuchtigkeit der Betonplatte zu schützen. Auf den Estrichen oder auf gespachtelten Untergründen werden teilweise auch sogenannte Unterlagen mit dampfbremsenden Eigenschaften eingesetzt, die entweder einseitig selbstklebend ausgerüstet sind und auf den Untergrund geklebt werden, oder nicht klebende Unterlagen sind, welche lose auf dem Untergrund verlegt oder auf dem Untergrund nass bzw. konventionell geklebt werden. Auf diese Unterlagen kann anschließend, zum Beispiel mit Nassklebstoffen, bzw. konventionellen Klebstoffen, ein Bodenbelag geklebt werden. Dies erfordert lange Trocknungszeiten, da diese Unterlagen die Feuchtigkeit aus den Klebstoffen nicht aufnehmen können bzw. sogenannt "nicht saugend" sind. Insbesondere muss nach der Verlegung des Bodenbelages üblicherweise noch mindestens 24 bis 72 Stunden abgewartet werden bevor der frisch verlegte Bodenbelag belastet werden kann. Ansonsten ist mit Verdrückungen der Klebstoffschicht und/oder einem schlechten optischen Ergebnis zu rechnen. Wegen der Dicke und Duktilität der Unterlagen sind viele Bodenbeläge nicht darauf verlegbar.

Diese Unterlagen sind zwar schnell verlegbar, aber bieten keinen ausreichenden Verlegekomfort. In den meisten Fällen weisen sie ein nur geringfügiges und daher ungenügendes Vermögen zum Ausgleichen von Unebenheiten auf, sodass im Allgemeinen ein gespachtelter oder plan geschliffener Untergrund für die Aufnahme der Dampfbremse vorliegen muss.

Dampfbremsen für verschiedene Untergründe sind beispielsweise aus der DE 10 2011 011292 A1 bekannt.

Es besteht ein Bedarf, ein Dampfbremssystem bereitzustellen, welches eine schnelle Verlegung desselben auf genügend planen und glatten, restfeuchten und feuchtebeständigen Untergründen, wie zum Beispiel flügelglatter Beton oder zementäre Spachtelmasse, ohne zusätzliche Trocknungszeiten und Wartezeiten erlaubt, und auf dem direkt ein Bodenbelag bzw. Boden verlegt werden kann, der sofort voll belastbar sein kann. Es ist zudem ein Dampfbremssytem bereitzustellen, welches eine schnelle Verlegung desselben auf genügend planen und glatten, restfeuchten und feuchtebeständigen Untergründen erlaubt, ohne zusätzliche Trocknungszeiten und Wartezeiten, auf das direkt ein zum Beispiel elastischer oder textiler Bodenbelag geklebt werden kann. Durch das Dampfbremssystem soll der restfeuchte Untergrund ausreichend abgedichtet werden, sodass auf dem Dampfbremssystem schnell ein, zum Beispiel elastischer oder textiler, Bodenbelag verlegt werden kann.

Die Erfindung betrifft eine doppelseitig selbstklebende Dampfbremse mit einer Dampfbremse, bevorzugt einer Dampfsperre, die schnell und einfach zum Ziel führt, wobei direkt auf die doppelseitig selbstklebende Dampfbremse ein textiler oder elastischer Bodenbelag verlegt, beispielsweise geklebt, werden kann. Dazu sind vorteilhafterweise keinerlei Wartezeiten oder Trocknungszeiten erforderlich und der Bodenbelag ist nach der Verlegung sofort voll belastbar.

Gemäß einem ersten Aspekt betrifft die vorliegende Erfindung eine selbstklebende Dampfbremse, umfassend:
- mindestens eine Trägerfolie;
- mindestens eine Bremsschicht für Feuchtigkeit;
- eine erste Haftkleberschicht, welche gegenüber Feuchtigkeit beständig ist und sich auf einer der Umgebung zugewandten Seite der selbstklebenden Dampfbremse befindet;
- eine zweite Haftkleberschicht, welche sich auf einer der ersten Haftkleberschicht gegenüberliegenden Seite der Trägerfolie befindet; und
- eine entfernbare Abdeckschicht, welche auf der zweiten Haftkleberschicht auf einer der Umgebung zugewandten Seite der selbstklebenden Dampfbremse gegenüber der Trägerfolie aufgebracht ist,
wobei die erste Haftkleberschicht nach Auftragung auf eine feuchtigkeitsgesättigte Faserzementplatte einen Schälwiderstand gemessen analog DIN EN 1939:2003 von ≥ 3.0 N/25 mm aufweist, und
wobei die erste Haftkleberschicht nach beschleunigter Alterung auf einer feuchtigkeitsgesättigten Faserzementplatte für 28 Tage bei 50°C unter Erhalt der Feuchtigkeit einen Schälwiderstand gemessen analog DIN EN 1939:2003 von ≥ 3.0 N/25 mm aufweist.

Gemäß einem weiteren Aspekt betrifft die vorliegende Erfindung die Verwendung der erfindungsgemäßen, selbstklebenden Dampfbremse zum Verlegen auf einem restfeuchten Untergrund.

Zudem betrifft die vorliegende Erfindung ein Verfahren zum Aufbringen einer selbstklebenden Dampfbremse auf einem restfeuchten Untergrund, umfassend:
- Aufbringen der erfindungsgemäßen, selbstklebenden Dampfbremse auf den restfeuchten Untergrund, wobei die erste Haftkleberschicht auf dem restfeuchten Untergrund aufgebracht wird.

Weitere Aspekte der vorliegenden Erfindung sind den abhängigen Ansprüchen und der detaillierten Beschreibung zu entnehmen.

Der erste Aspekt der vorliegenden Erfindung betrifft eine selbstklebende Dampfbremse, umfassend:
- mindestens eine Trägerfolie;
- mindestens eine Bremsschicht für Feuchtigkeit;
- eine erste Haftkleberschicht, welche gegenüber Feuchtigkeit beständig ist und sich auf einer der Umgebung zugewandten Seite der selbstklebenden Dampfbremse befindet;
- eine zweite Haftkleberschicht, welche sich auf einer der ersten Haftkleberschicht gegenüberliegenden Seite der Trägerfolie befindet; und
- eine entfernbare Abdeckschicht, welche auf der zweiten Haftkleberschicht auf einer der Umgebung zugewandten Seite der selbstklebenden Dampfbremse gegenüber der Trägerfolie aufgebracht ist,
wobei die erste Haftkleberschicht nach Auftragung auf eine feuchtigkeitsgesättigte Faserzementplatte einen Schälwiderstand gemessen analog DIN EN 1939:2003 von ≥ 3.0 N/25 mm, bevorzugt ≥ 6.0 N/25 mm, aufweist, und
wobei die erste Haftkleberschicht nach beschleunigter Alterung auf einer feuchtigkeitsgesättigten Faserzementplatte für 20 Tage, bevorzugt für 28 Tage, weiter bevorzugt für 41 Tage, bei 50°C unter Erhalt der Feuchtigkeit einen Schälwiderstand gemessen analog DIN EN 1939:2003 von ≥ 3.0 N/25 mm, bevorzugt ≥ 6.0 N/25 mm, aufweist.

Eine selbstklebende Dampfbremse ist hierbei eine Folie, welche durch mindestens eine Haftkleberschicht, beispielsweise die erste Haftkleberschicht, in der Lage ist, auf einem Untergrund zu haften, wobei hier die erste Haftkleberschicht in der Lage ist, auf einem restfeuchten Untergrund zu haften. Zudem ist die erste Haftkleberschicht gegenüber Feuchtigkeit beständig, indem eine ausreichende Befestigung an einem restfeuchten Untergrund gewährleistet wird, welche beispielsweise anhand des Schälwiderstands bestimmt werden kann. Diese Beständigkeit ist vorzugsweise auch nach Alterung gegeben.

Als Dampfbremse wird eine Bremse gegenüber migrierender bzw. diffundierender Feuchtigkeit verstanden; zum Beispiel allgemein gegenüber einer Diffusion von Wasser verstanden, zum Beispiel Osmose.

Die Messung des Schälwiderstands erfolgt erfindungsgemäß analog DIN EN 1939:2003 unter Verwendung der identischen Prüfverfahren, wobei jedoch projektspezifische Untergründe verwendet wurden. Mit den in der Norm angegebenen Materialien kann kein restfeuchter Untergrund simuliert werden, welcher beim tatsächlichen Verlegen der erfindungsgemäßen, selbstklebenden Dampfbremse in Kontakt kommt und in Verbindung tritt.

Normgemäß erfolgt die Messung nach Auftragung nach dem normativ angegebenen Verfahren oder nach beschleunigter Alterung. Die Prüfung erfolgt in jedem Fall bei Normklima, auch nach beschleunigter Alterung.

Auf Datenblättern werden zumeist Klebkräfte auf Normuntergründen wie zum Beispiel Stahl (V2A) oder Glas angegeben. Es hat sich gezeigt, dass die auf den Datenblättern angegebenen Messwerte lediglich als Ausgangspunkt für eine grobe Klebstoffselektion dienen können und diese jeweils spezifisch geprüft werden müssen.

Es ist durchaus üblich, dass im Rahmen einer Produktentwicklung die Klebeeigenschaften der jeweiligen Haftklebstoffe auf den projektspezifischen Untergründen sowie den projektspezifischen Bodenbelägen sowie die Beständigkeit gegenüber den im geplanten Einsatz auftretenden Bedingungen geprüft werden müssen für eine Klebstoffselektion. Ganz besonders gilt dies für Klebstoffe, welche auf restfeuchte Untergründe geklebt werden sollen. Für die vorliegende Messung des Schälwiderstands wird somit anstelle eines Untergrunds aus nichtrostendem Stahl eine feuchtigkeitsgesättigte Faserzementplatte verwendet.

Darüber hinaus erfolgt die Messung jedoch gemäß DIN EN 1939:2003. Dazu wurden Prüfkörper gemäß DIN EN 1939:2003 hergestellt und auf trockenen sowie feuchtigkeitsgesättigten Faserzementplatten geklebt und geprüft gemäß den in DIN EN 1939:2003 beschriebenen Verfahren.

Die Feuchtigkeitssättigung der Faserzementplatte kann hierbei beispielsweise dadurch erreicht werden, dass die Faserzementplatte derart in, beispielsweise entionisiertes, Wasser gelegt wird, dass sie gerade nicht oder gerade eben mit Wasser bedeckt ist, also bis zu einer oberen Kante an allen Seiten von Wasser umgeben ist oder auch die Oberseite der Faserzementplatte gerade von einer minimalen Menge an Wasser, beispielsweise einem Wasserspiegel mit einer Höhe von weniger als 1 cm, zum Beispiel weniger als 0,5 cm, 0,3 cm oder 0,1 cm, bedeckt ist. Auf der Unterseite kann sich die Faserzementplatte auf dem Boden eines geeigneten Behälters für das Wasser befinden, welcher bevorzugt nicht in das System aus Wasser und Faserzement eingreift und bevorzugt auch nicht mit dem Wasser reagiert, zum Beispiel ein Behälter aus nichtrostendem Stahl.

Als Faserzementplatte wird hierbei eine handelsübliche, unbehandelte Faserzementplatte angesehen, zum Beispiel Eterplan von Eternit.

Gemäß bestimmten Ausführungsformen weist die erste Haftkleberschicht zudem nach Auftragung auf eine trockene Faserzementplatte einen Schälwiderstand gemessen analog DIN EN 1939:2003 von ≥ 3.0 N/25 mm, bevorzugt ≥ 6.0 N/25 mm, auf.

Für das Funktionieren der langjährigen Klebung auf feuchten Untergründen sollte nicht nur die Anfangshaftung ausreichend sein, sondern es sollte auch gewährleistet sein, dass die benötigten Klebeeigenschaften über die ganze Lebensdauer von einem darauf zu verlegenden Bodenbelag erhalten bleiben. Die Lebensdauer von Bodenbelägen kann bis zu 20 Jahre sein, wobei oftmals der Belag nach 5-10 Jahre verschlissen ist und gewechselt werden sollte.

Die Beständigkeit der ersten Haftkleberschicht der erfindungsgemäßen, selbstklebenden Dampfbremse mit der Bremsschicht für Feuchtigkeit, beispielsweise auch als Dampfbremse bezeichnet, kann dadurch bestimmt werden, dass Schälprüfkörper angelehnt an die DIN EN 1939:2003 auf feuchten Faserzementplatten hergestellt werden und diese bei erhöhter Temperatur in feuchtem Zustand beschleunigt gealtert werden. Die Lagerdauer sollte hierzu auf die zu erwartende Einsatzdauer abgestimmt werden.

Die erste Haftkleberschicht weist daher zudem nach beschleunigter Alterung auf einer feuchtigkeitsgesättigten Faserzementplatte für 20 Tage, bevorzugt für 28 Tage, weiter bevorzugt für 41 Tage, bei 50°C unter Erhalt der Feuchtigkeit einen Schälwiderstand gemessen analog DIN EN 1939:2003 von ≥ 3.0 N/25 mm, bevorzugt ≥ 6.0 N/25 mm, auf. Hierbei erfolgt ebenfalls die Herstellung der Prüfkörper gemäß DIN EN 1939:2003, wobei diese dann für 20 Tage, bevorzugt für 28 Tage, weiter bevorzugt für 41 Tage, bei 50°C unter Erhalt der Feuchtigkeit gealtert werden. Die Lagerung bzw. Alterung für 20 Tage, bevorzugt für 28 Tage, weiter bevorzugt für 41 Tage, bei 50°C unter Erhalt der Feuchtigkeit bildet hierbei eine langandauernde Feuchtigkeitseinwirkung ab. Ein Erhalt der Feuchtigkeit stellt hierbei sicher, dass die Faserzementplatte wie auch weitere Bestandteile des Prüfkörpers nicht austrocknen und die Feuchtigkeitssättigung der Faserzementplatte erhalten bleibt, und kann auf geeignete Weise sichergestellt werden, beispielsweise durch entsprechendes Nachbefeuchten und/oder Lagern in einem geschlossenen Raum mit kontrollierter Feuchtigkeit. Nach der Alterung erfolgt wiederum die Prüfung des Schälwiderstands gemäß den in DIN EN 1939:2003 beschriebenen Verfahren.

Gemäß bestimmten Ausführungsformen nimmt der Schälwiderstand bei der beschleunigten Alterung auf einer feuchtigkeitsgesättigten Faserzementplatte für 20 Tage, bevorzugt für 28 Tage, weiter bevorzugt für 41 Tage bei 50°C unter Erhalt der Feuchtigkeit nicht ab im Vergleich zum Zeitpunkt der Messung nach Auftragung, beispielsweise 15 Minuten nach Auftragung, auf eine feuchtigkeitsgesättigte Faserzementplatte.

Auf mineralischen Untergründen, wie zum Beispiel Beton, Zementestrich, zementären Spachtelmassen, etc., können sowohl die Oberfläche als auch die migrierende Feuchtigkeit alkalisch sein. pH Werte zwischen 8.0 und 13.5 sind durchaus üblich und in der Praxis vorhanden. Die pH Werte der Oberflächen oder auch von migrierender Feuchtigkeit können hierbei gemäß ASTM F710-11, Absatz 5.2 (ASTM F710-11, Standard Practice for Preparing Concrete Floors to Receive Resilient Flooring, ASTM International, West Conshohocken, PA, 2011) mit einem geeigneten pH-Teststreifen gemessen werden.

Insbesondere hat die erste Haftkleberschicht daher zudem eine ausreichende Beständigkeit gegenüber alkalischer Feuchtigkeit. Gemäß bestimmten Ausführungsformen ist die erste Haftkleberschicht daher gegenüber alkalischer Feuchtigkeit bei einem pH von gleich oder mehr als 8,0 und gleich oder weniger als 13,5, bevorzugt gleich oder mehr als 8,5 und gleich oder weniger als 13,0, beständig. Die Beständigkeit ist hierbei vorteilhafterweise sowohl zu Beginn eines Aufbringens bzw. Verlegens wie auch nach Alterung gegeben, sodass also die erste Haftkleberschicht nach Auftragung auf eine feuchtigkeitsgesättigte Faserzementplatte bei einem pH von gleich oder mehr als 8,0 und gleich oder weniger als 13,5, bevorzugt gleich oder mehr als 8,5 und gleich oder weniger als 13,0, einen Schälwiderstand gemessen analog DIN EN 1939:2003 von ≥ 3.0 N/25 mm, bevorzugt ≥ 6.0 N/25 mm, aufweist, und/oder die erste Haftkleberschicht nach beschleunigter Alterung auf einer feuchtigkeitsgesättigten Faserzementplatte für 20 Tage, bevorzugt für 28 Tage, weiter bevorzugt für 41 Tage bei 50°C unter Erhalt der Feuchtigkeit bei einem pH von gleich oder mehr als 8,0 und gleich oder weniger als 13,5, bevorzugt gleich oder mehr als 8,5 und gleich oder weniger als 13,0, einen Schälwiderstand gemessen analog DIN EN 1939:2003 von ≥ 3.0 N/25 mm, bevorzugt ≥ 6.0 N/25 mm, aufweist. Die Alkalinität zwischen pH 8,0 und 13,5 kann beispielsweise durch die Befeuchtung von Faserzementplatten mit entionisiertem Wasser erreicht werden.

Auch hierbei ist bevorzugt, dass der Schälwiderstand während der Alterung nicht abnimmt.

Da die erste Haftkleberschicht bei einem Verlegen mit dem restfeuchten Untergrund in Berührung kommt und deshalb vom restfeuchten Untergrund betrachtet in der erfindungsgemäßen selbstklebenden Dampfbremse unten bzw. unter der Trägerfolie liegt, kann sie auch als untere Haftkleberschicht bezeichnet werden. Entsprechend kann die zweite Haftkleberschicht als obere Haftkleberschicht bezeichnet werden, da sie in der erfindungsgemäßen selbstklebenden Dampfbremse oben bzw. oberhalb der Trägerfolie liegt.

Für die erste Haftkleberschicht bedeutet der Begriff "der Umgebung zugewandt", so keine optionale entfernbare Abdeckschicht vorhanden ist, dass sich keine weitere Schicht mehr anschließt, welche zur erfindungsgemäßen, selbstklebenden Dampfbremse gehört, sondern diese eine Oberfläche der erfindungsgemäßen, selbstklebenden Dampfbremse bildet. Selbstverständlich kann diese bei einer weiteren Verarbeitung der selbstklebenden Dampfbremse, beispielsweise beim Verlegen, mit dem Untergrund in Berührung kommen, welcher dann als Umgebung zu verstehen ist. Die Umgebung muss also nicht zwingend Luft sein.

Die erste Haftkleberschicht ist hinsichtlich ihrer Ausbildung nicht besonders beschränkt und kann auch an einen restfeuchten Untergrund, auf den die erfindungsgemäße, selbstklebende Dampfbremse zu verlegen ist, angepasst sein, indem sie beispielsweise plan oder strukturiert ausgebildet ist.

Gemäß bestimmten Ausführungsformen weist die erste Haftkleberschicht eine Klebstoffauftragsmasse von 10 -100 g/m² auf, wobei diese gemäß bestimmten Ausführungsformen, beispielsweise je nach Anwendungsbereich und Untergrund, 20 - 80 g/m² oder 30 - 70 g/m² sein kann.

Das Material der ersten Haftkleberschicht ist nicht besonders beschränkt, insofern es die entsprechende Feuchtigkeitsbeständigkeit der ersten Haftkleberschicht erbringt und auf einem restfeuchten, bevorzugt mineralischen, Untergrund haftet, und kann auch Materialmischungen umfassen. Die erste Haftkleberschicht liegt gemäß bestimmten Ausführungsformen als Schmelzklebstoff, lösemittelbasierter Klebstoff oder Dispersionsklebstoff, bevorzugt als Schmelzklebstoff oder lösemittelbasierter Klebstoff, besonders bevorzugt als Schmelzklebstoff, vor, welche rein physikalisch härtend und/oder chemisch und/oder physikalisch nachvernetzend ausgerüstet sind.

Gemäß bestimmten Ausführungsformen kann die erste Haftkleberschicht aus einem Haftklebermaterial bestehen oder dieses umfassen, welches ausgewählt ist aus der Gruppe bestehend aus Haftklebstoffen basierend auf Kautschuk, Naturkautschuk Synthesekautschuk wie zum Beispiel Styrol-Butadien-Blockcopolymeren (SBS), Acrylat, Chloropren-Kautschuk, Polyurethan, Styrolacrylat, Vinylacetat, Vinylacetat-Ethylen, Vinylversatat, Polyethylenvinylacetat, Polyethylenvinylversatat, Polyacrylat, und/oder deren Mischungen und/oder deren Copolymerisaten, bevorzugt Haftklebestoffen basierend auf Kautschuk, Naturkautschuk Synthesekautschuk wie zum Beispiel SBS Blockcopolymeren, Polyurethan, Polyacrylat, Polyethylenvinylacetat, Polyethylenvinylversatat und/oder deren Mischungen und/oder deren Copolymerisaten, besonders bevorzugt Haftklebstoffen basierend auf Kautschuk, Naturkautschuk Synthesekautschuk wie zum Beispiel SBS Blockcopolymeren, Chloropren-Kautschuk und/oder deren Mischungen und/oder deren Copolymerisaten, wobei hierbei wiederum Schmelzklebstoffe (Hotmelts) und/oder lösemittelbasierte Klebstoffe bevorzugt sind.

Neben der ersten Haftkleberschicht umfasst die erfindungsgemäße, selbstklebende Dampfbremse weiterhin mindestens eine Trägerfolie. Die Trägerfolie kann hierbei in Form einer einschichtigen oder mehrschichtigen Folie mit zwei oder mehr Schichten oder auch als Verbundwerkstoff ausgebildet sein.

Gemäß bestimmten Ausführungsformen umfasst die Trägerfolie einen oder mehrere, zum Beispiel einen, Folienträger, auf welchen eine oder mehrere verschiedene Schichten wie die erste Haftkleberschicht, eine oder mehrere Bremsschichten gegenüber Feuchtigkeit, zum Beispiel eine Bremsschicht gegenüber Feuchtigkeit, und/oder eine zweite Haftkleberschicht aufgebracht werden können, wobei die erste Haftkleberschicht und die zweite Haftkleberschicht als separate Schichten im Verhältnis zur Trägerfolie ausgebildet sein können, die Bremsschicht gegenüber Feuchtigkeit wiederum jedoch auch als Teil der Trägerfolie mit dem Folienträger oder einer anderen Schicht in einem Mehrschichtverbund verbunden sein kann, also in die Trägerfolie integriert sein kann oder Teil der Trägerfolie sein kann. Gemäß bestimmten Ausführungsformen besteht die Trägerfolie aus einem oder mehreren, zum Beispiel einem, Folienträger. Gemäß bestimmten Ausführungsformen kann auch der Folienträger selbst, so er als Bremse gegenüber Feuchtigkeit fungiert, als Bremsschicht gegenüber Feuchtigkeit vorgesehen sein, also sowohl als Trägerfolie wie auch als Bremsschicht gegenüber Feuchtigkeit fungieren. Gemäß bestimmten Ausführungsformen unterscheiden sich Folienträger und Bremsschicht gegenüber Feuchtigkeit.

Das Material des Folienträgers ist hierbei nicht besonders beschränkt, insofern die weiteren Schichten aufgebracht werden können. Beispielsweise kann der Folienträger als Metallfolie bzw. Metallschicht oder Polymerfolie ausgebildet sein. Als Polymer kann das Material auch geschäumt sein. Gemäß bestimmten Ausführungsformen besteht der Folienträger oder die Trägerfolie aus einem Polymermaterial.

Das Polymer des Folienträgers oder der Trägerfolie ist hierbei nicht besonders beschränkt und kann beispielsweise Polymermaterialien umfassen bzw. aus Polymermaterialien bestehen, welche ausgewählt sind aus der Gruppe, bestehend aus Polyethylen (PE), Polypropylen (PP), aromatische und/oder aliphatische Polyamide (PA), aliphatische und/oder aromatische Polyester (PES), Polyethylenpropylen (PEP), Polyethylenterephthalat (PET), Polylactid (PLA), Polymethylmethacrylat (PMMA), Polyolefine (PO), Polyvinylbutyral (PVB), Polybutadien, Neopren, Latex, Nitrilkautschuk (NBR), Styrol-Butadien-Kautschuk (SBR), Polyvinylchlorid (PVC), Polycarbonat (PC), Polyacrylsäureester (PAA), Polyacrylnitril (PAN), Polyamidimid (PAI), Polybutylacrylat (PBA), Polyesteramid (PEA), Polyetherimid (PEI), Polyetherketon (PEK), Polyethercarbonat (PEC), Polyimid (PI), Polyacrylesterimid, beispielsweise Polymethacrylmethylimid (PMMI), Polyoxymethylen (POM), Polyphenylvinyl (PPV), Polystyrol (PS), Polyurethan (PUR), Polyvinylacetat (PVAC), Polyvinylalkohol (PVOH), Polyvinylfluorid (PVF) oder Copolymeren und/oder Mischungen davon, bevorzugt aus der Gruppe bestehend aus Polyethylen (PE), Polypropylen (PP), aromatische und/oder aliphatische Polyamide (PA), aliphatische und/oder aromatische Polyester (PES), Polyethylenpropylen (PEP), Polyethylenterephthalat (PET), Polylactid (PLA), Polyacrylnitril (PAN), Polymethylmethacrylat (PMMA), Polyolefine (PO), Polyvinylbutyral (PVB), Polybutadien, Neopren, Latex und/oder Polyvinylchlorid (PVC) und/oder Copolymeren und/oder Mischungen davon. Gemäß bestimmten Ausführungsformen umfasst der Folienträger oder die Trägerfolie Polyethylen (PE), Polypropylen (PP), Polyethylenpropylen (PEP), Polyolefine (PO), Polyvinylchlorid (PVC), Polyacrylnitril (PAN), Latex, Nitrilkautschuk (NBR) und/oder Styrol-Butadien-Kautschuk (SBR) und/oder Copolymeren und/oder Mischungen davon und/oder besteht daraus.

Falls für den Folienträger oder die Trägerfolie oder eine Schicht in einer mehrschichtigen Trägerfolie ein Schaum eingesetzt wird oder mit eingesetzt wird, so besteht der Schaum bevorzugt aus einem Polymermaterial aus der Gruppe Polyethylen (PE), Polypropylen (PP), aromatische und/oder aliphatische Polyamide (PA), aliphatische und/oder aromatische Polyester (PES), Polyethylenpropylen (PEP), Polyether, Polyurethan, Polyethylenterephthalat (PET), Polylactid, Polyolefine, Polyvinylbutyral, Polybutadien, Neopren, Latex und/oder Polyvinylchlorid und/oder Copolymeren und/oder Mischungen davon.

So beispielsweise das Material des Folienträgers oder der Trägerfolie empfindlich gegenüber Weichmachern ist, umfasst die erfindungsgemäße, selbstklebende Dampfbremse gemäß bestimmten Ausführungsformen weiter mindestens eine Sperrschicht, welche für Weichmacher undurchlässig ist. Gemäß bestimmten Ausführungsformen umfasst die erfindungsgemäße, selbstklebende Dampfbremse weiter mindestens eine Sperrschicht, welche für Weichmacher undurchlässig ist. Es ist nicht ausgeschlossen, dass mehrere Sperrschichten für Weichmacher vorgesehen sind. Eine solche Sperrschicht gegenüber Weichmacher befindet sich bevorzugt auf einer Seite der selbstklebenden Dampfbremse, von der nach dem Verlegen und Verarbeiten der selbstklebenden Dampfbremse ein Weichmachereintrag zu befürchten oder zu erwarten ist, also beispielsweise von der Oberseite aus verschiedenen Bodenbelägen, welche der Seite entspricht, auf der die zweite Haftkleberschicht aufgebracht ist. So ein Weichmachereintrag aus Richtung des Bodens zu befürchten ist, kann auch eine Sperrschicht, welche für Weichmacher undurchlässig ist, auf dem Folienträger oder der Trägerfolie in Richtung der ersten Haftkleberschicht hin angeordnet sein. Eine Sperrschicht, welche für Weichmacher undurchlässig ist, ist hierbei bevorzugt eine Schicht, welche keinen Weichmacher durchlässt.

Das Material der Sperrschicht, welche für Weichmacher undurchlässig ist, ist hierbei nicht besonders beschränkt, so es einen Weichmacherdurchtritt verhindert, und ist beispielsweise polymer, metallisch und/oder keramisch, also umfasst ein oder mehrere Polymere, Metalle und/oder Keramiken und/oder besteht daraus. Als Sperrschicht, welche für Weichmacher undurchlässig ist, kann beispielsweise eine Schicht dienen, welche ein Metall, ein Metalloxid und/oder ein Polymer umfassend Polyethylenterephthalat (PET), aromatische und/oder aliphatische Polyamide (PA), aliphatische und/oder aromatische Polyester (PES), Polymethylmethacrylat (PMMA), Polyacrylnitril (PAN), Polyvinylchlorid (PVC), Polycarbonat (PC), Polyurethan (PUR), Polyvinylacetat (PVAC), Polyvinylalkohol (PVOH) und/oder Copolymere und/oder Mischungen davon, bevorzugt Polyethylenterephthalat (PET), aromatische und/oder aliphatische Polyamide (PA), Polyacrylnitril (PAN), Polyvinylalkohol (PVOH) und/oder Polymethylmethacrylat (PMMA) und/oder Copolymere und/oder Mischungen davon enthält und/oder daraus besteht.

Gemäß bestimmten Ausführungsformen ist die mindestens eine Sperrschicht, welche für Weichmacher undurchlässig ist, eine Polymerschicht, welche eine Dicke von 1 bis 200 µm aufweist, und/oder eine Metall- oder Metalloxidschicht, welche eine Dicke von 10 nm bis 100 µm aufweist, bevorzugt eine Polymerschicht, welche eine Dicke von 10 µm bis zu 150 µm, bevorzugt 15 bis 100 µm, weiter bevorzugt 20 bis 60 µm, aufweist, und/oder eine Metall- oder Metalloxidschicht, welche eine Dicke von 15nm bis 50 µm, bevorzugt 20 nm - 30 µm aufweist.

Gemäß bestimmten Ausführungsformen ist die mindestens eine Bremsschicht für Feuchtigkeit und/oder die optionale mindestens eine Sperrschicht, welche für Weichmacher undurchlässig ist, in die Trägerfolie integriert. Diese können also beispielsweise auf den Folienträger und/oder eine andere Schicht in einem mehrschichtigen Aufbau der Trägerfolie aufgebracht sein, oder der Folienträger kann eine oder beide Funktionen, also die Weichmachersperre und/oder die Bremse gegen Feuchtigkeit, übernehmen. Somit kann die Trägerfolie mindestens eine weichmachersperrende Schicht, also eine Sperrschicht, welche für Weichmacher undurchlässig ist, insbesondere eine Schicht, welche eine sperrende Wirkung gegenüber migrationsfähigen organischen Stoffen aufweist, und/oder mindestens eine Bremsschicht für Feuchtigkeit, insbesondere eine Schicht, welche eine sperrende Wirkung gegenüber Wasserdampf aufweist, enthalten.

In der erfindungsgemäßen, selbstklebenden Dampfbremse befindet sich oberhalb der Trägerfolie auf einer der Umgebung zugewandten Seite der selbstklebenden Dampfbremse auf der der ersten Haftkleberschicht gegenüberliegenden Seite eine zweite Haftklebeschicht und darüber eine entfernbare Abdeckschicht. Beim Verlegen auf den Untergrund entspricht dies der oberen Seite der selbstklebenden Dampfbremse. Hierbei bedeutet der Begriff "der Umgebung zugewandt", dass sich keine weitere Schicht mehr anschließt, welche zur erfindungsgemäßen, selbstklebenden Dampfbremse gehört, sondern diese eine Oberfläche der erfindungsgemäßen, selbstklebenden Dampfbremse bildet, also beispielsweise die entfernbare Abdeckschicht bzw. nach einer Entfernung davon im erfindungsgemäßen Verfahren die zweite Haftkleberschicht. Die erfindungsgemäße, selbstklebende Dampfbremse umfasst also zudem eine zweite Haftkleberschicht, welche sich auf einer der ersten Haftkleberschicht gegenüberliegenden Seite der Trägerfolie befindet. So auf dieser zweiten Haftkleberschicht keine entfernbare Abdeckschicht vorhanden ist, ist die zweite Haftkleberschicht der Umgebung zugewandt. Falls eine entfernbare Abdeckschicht auf der zweiten Haftkleberschicht vorhanden ist, ist diese der Umgebung zugewandt.

Selbstverständlich kann die zweite Haftkleberschicht nach einem Entfernen der entfernbaren Abdeckschicht bei einer weiteren Verarbeitung der selbstklebenden Dampfbremse wiederum bedeckt werden, beispielsweise mit einem Bodenbelag, sodass die Umgebung hierbei nicht nur Luft sein muss. Ebenfalls kann diese Schicht, beispielsweise die entfernbare Abdeckschicht, in einem aufgerollten Zustand der selbstklebenden Dampfbremse in der Rolle der ersten Haftkleberschicht zumindest teilweise gegenüberliegen, wobei sie sich mit dieser bevorzugt jedoch nicht verbindet und beim Ausrollen der selbstklebenden Dampfbremse wieder von der ersten Haftklebeschicht löst.

Gemäß bestimmten Ausführungsformen ist die zweite Haftkleberschicht, welche auch als obere Haftkleberschicht bezeichnet werden kann, da sie bei einem Verlegen vom restfeuchten Untergrund gesehen oben liegt und oberhalb der Trägerfolie liegt im Vergleich zur ersten Haftkleberschicht, beständig gegenüber stofflichen Einflüssen aus Bodenbelägen, welche beim Verlegen auf diese aufgebracht und mit dieser verbunden werden, beispielsweise gegenüber Weichmachern. Durch ihre Lage oben beim Verlegen ist diese mit der oberen Oberfläche, abgewandt von der Trägerfolie, einem zu verlegenden Bodenbelagsrücken zugewandt.

Die zweite Haftkleberschicht ist hinsichtlich ihrer Oberflächenbeschaffenheit nicht besonders beschränkt und kann beispielsweise auf einen zu verlegenden Bodenbelag abgestimmt sein. Sie kann beispielsweise plan oder strukturiert ausgebildet sein.

Gemäß bestimmten Ausführungsformen weist die zweite Haftkleberschicht eine Klebstoffauftragsmasse von 10 - 200 g/m², bevorzugt 20 - 150 g/m², besonders bevorzugt 30 -100 g/m² auf.

Das Material der zweiten Haftkleberschicht ist nicht besonders beschränkt, insofern es mit einem zu verlegenden Bodenbelag verbunden und verklebt werden kann. Die zweite Haftkleberschicht kann beispielsweise aus Haftklebstoffen basierend auf Acrylat, Chloropren-Kautschuk, Polyurethan, Styrolacrylat, Vinylacetat, Vinylacetat-Ethylen, Vinylversatat und/oder deren Mischungen und/oder deren Copolymerisaten bestehen oder diese umfassen, wobei diese bevorzugt als Dispersions-Klebstoffe, lösemittelbasierter Klebstoffe und/oder Schmelzklebstoffe vorliegen, und dabei beispielsweise rein physikalisch härtend und/oder chemisch und/oder physikalisch nachvernetzend ausgerüstet sind.

Darüber hinaus umfasst die erfindungsgemäße, selbstklebende Dampfbremse eine entfernbare Abdeckschicht, beispielsweise einen Liner, welcher auf der zweiten Haftkleberschicht auf einer der Umgebung zugewandten Seite der selbstklebenden Dampfbremse gegenüber der Trägerfolie aufgebracht ist. Hierdurch kann bei einem Aufrollen der selbstklebenden Dampfbremse eine Verbindung mit der ersten Haftkleberschicht verhindert werden. Auch wird die zweite Haftkleberschicht hierdurch von Staub geschützt. Zudem kann zum Staubschutz natürlich auch die erste Haftkleberschicht mit einer entfernbaren Abdeckschicht versehen sein, welche auf der der Umgebung zugewandten Seite der ersten Haftkleberschicht vorgesehen sein kann, insbesondere bei einer Plattenform der erfindungsgemäßen, selbstklebenden Dampfbremse. Die entfernbare Abdeckschicht bzw. entfernbaren Abdeckschichten - so zwei oder mehr vorhanden sind - sind gemäß bestimmten Ausführungsformen beidseitig antihaftbeschichtet, was besonders vorteilhaft ist, wenn nur eine entfernbare Abdeckschicht vorgesehen ist und diese aufgerollt wird, um an keiner der beiden (ersten und zweiten) Haftklebeschichten zu haften, wobei beispielsweise die Haftung der entfernbaren Abdeckschicht in diesem Fall auf der ersten Haftkleberschicht geringer sein kann. Wenn zwei oder mehr entfernbare Abdeckschichten vorhanden sind, können diese auch einseitig antihaftbeschichtet sein.

Zusätzlich dazu kann, wie oben angeführt, auf der ersten Haftkleberschicht eine entfernbare Abdeckschicht, beispielsweise eine haftungsmindernden Abdeckschicht, vorgesehen sein, welche nicht weiter besonders beschränkt ist, insoweit sie entfernbar ist und insbesondere haftungsmindernd ist. Für eine haftungsmindernde, entfernbare Abdeckschicht, welche auf der zweiten und/oder ersten Haftkleberschicht vorgesehen sein kann, können beispielsweise bei einer Messung des Schälwiderstands, gemessen analog DIN EN 1939:2003, zwischen der entfernbaren Abdeckschicht und der ersten und/oder zweiten Haftkleberschicht Werte von ≤ 5.0 N/25mm, bevorzugt ≤ 3.0 N/25mm, besonders bevorzugt ≤ 1.5 N/25mm erhalten werden.

Gemäß bestimmten Ausführungsformen umfasst die erfindungsgemäße, selbstklebende Dampfbremse eine entfernbare Abdeckschicht, welche auf der zweiten Haftkleberschicht auf einer der Umgebung zugewandten Seite der selbstklebenden Dampfbremse gegenüber der Trägerfolie aufgebracht ist, wobei diese eine Haftung gegenüber der ersten und/oder zweiten Haftkleberschicht, gemessen analog DIN EN 1939, von ≥ 5.0 N/25mm, bevorzugt ≤ 3.0 N/25mm, besonders bevorzugt ≤ 1.5 N/25mm, aufweist.

Die erfindungsgemäße, selbstklebende Dampfbremse umfasst zudem mindestens eine Bremsschicht gegenüber Feuchtigkeit, beispielsweise auch eine Sperrschicht gegenüber Feuchtigkeit, und kann auch mehrere Bremsschichten und/oder Sperrschichten gegenüber Feuchtigkeit umfassen.

Gemäß bestimmten Ausführungsformen weist die Bremsschicht für Feuchtigkeit einen S_{D}-Wert, gemessen nach ASTM E 398-13, von mindestens 50 m, bevorzugt mindestens 100 m, weiter bevorzugt mindestens 200 m, auf. Eine Sperrschicht gegenüber Feuchtigkeit weist beispielsweise insbesondere einen S_{D}-Wert, gemessen nach ASTM E 398-13, von mindestens 1500 m auf.

Die mindestens eine Bremsschicht gegenüber Feuchtigkeit ist nicht besonders beschränkt, solange sie als Bremse gegenüber Feuchtigkeit wirkt, und kann beispielsweise polymer, metallisch und/oder keramisch, beispielsweise eine Metalloxidschicht, sein.

Als Metall eignet sich beispielsweise Al, Cu, Ag, Au, Ti, Cr, Ni, Pd und/oder Pt, beispielsweise Al, Ag, Au, Pd und/oder Cu, insbesondere Al und/oder Cu, welches als Folie vorgesehen sein kann und/oder beschichtet, beispielsweise aufgedampft, sein kann.

Als Metalloxide eignen sich beispielsweise Aluminiumoxid, Siliziumdioxid, Titanoxid, etc., bzw. Mischoxide; insbesondere eignen sich Aluminiumoxid, Siliziumoxid, Aluminiumsiliziumoxid.

Die mindestens eine Bremsschicht gegenüber Feuchtigkeit kann als Polymer beispielsweise ein Material umfassen bzw. aus einem Material bestehen, welches ausgewählt ist aus der Gruppe, bestehend aus Polypropylen (PP), Polyethylen (PE), Polyolefinen (PO), Latex, Nitrilkautschuk (NBR), Styrol-Butadien-Kautschuk (SBR), Polycarbonat (PC), Polyvinylchlorid (PVC), Polyvinylacetat (PVAC), Polyurethan (PU) und/oder Copolymeren und/oder Mischungen davon, weiter bevorzugt Polypropylen (PP), Polyethylen (PE), Polyolefinen (PO), Latex, Nitrilkautschuk (NBR), Styrol-Butadien-Kautschuk (SBR), Polyvinylchlorid (PVC) und/oder Copolymeren und/oder Mischungen davon.

Gemäß bestimmten Ausführungsformen ist die mindestens eine Bremsschicht gegenüber Feuchtigkeit und/oder die optionale Sperrschicht gegenüber Weichmachern eine Polymerschicht aus Polymermaterial. Wie ausgeführt kann in bestimmten Ausführungsformen die Bremsschicht gegenüber Feuchtigkeit und/oder gegenüber Weichmacher in die Trägerfolie integriert sein.

So die Bremsschicht gegenüber Feuchtigkeit als Polymerschicht vorgesehen ist, weist diese gemäß bestimmten Ausführungsformen eine Dicke im Bereich von 10 µm bis zu 1000 µm auf, bevorzugt im Bereich von 20 µm bis zu 500 µm, weiter bevorzugter im Bereich von 50 µm bis zu 300 µm. Dies ergibt im Fall der Verwendung einer Polymerschicht als Bremsschicht gegenüber Feuchtigkeit eine besondere Stabilität sowohl in mechanischer Hinsicht als auch in Hinsicht auf Bremswirkung gegenüber Feuchtigkeit. Bei Metallen oder Metalloxiden liegt die Dicke der Bremsschicht gegenüber Feuchtigkeit gemäß bestimmten Ausführungsformen in einem Dickenbereich von 10 nm bis ca. 100 µm.

So die Sperrschicht gegenüber Weichmacher als Polymerschicht vorgesehen ist, weist diese gemäß bestimmten Ausführungsformen eine Dicke im Bereich von 1 µm bis zu 200 µm auf, bevorzugt im Bereich von 10 µm bis zu 150 µm, weiter bevorzugter im Bereich von 15 bis 100 µm, noch weiter bevorzugt 20 bis 60 µm, auf. So die Sperrschicht gegenüber Weichmacher als Metall- oder Metalloxidschicht vorgesehen ist, weist diese gemäß bestimmten Ausführungsformen eine Dicke von 15 nm bis 50 µm, bevorzugt 20 nm - 30 µm auf.

Es ist auch denkbar, dass die Trägerfolie allein aus einer metallischen Dampfbremse und ggf. Weichmachersperre besteht, welche gemäß bestimmten Ausführungsformen eine Dicke von 10 bis 500 µm, bevorzugt 20 bis 200 µm, weiter bevorzugt 30 bis 100 µm aufweist.

Gemäß bestimmten Ausführungsformen weist die erfindungsgemäße, selbstklebende Dampfbremse eine dampfbremsende Wirkung bzw. Bremswirkung gegenüber Feuchtigkeit mit einem S_{D}-Wert, gemessen nach ASTM E 398-13, von mindestens 50 m, bevorzugt mindestens 100 m, weiter bevorzugt mindestens 200 m, noch weiter bevorzugt mindestens 500 m, insbesondere bevorzugt mindestens 1500 m, auf.

Die erfindungsgemäße, selbstklebende Dampfbremse kann in verschiedenen Ausführungsformen hergestellt werden, beispielsweise in Rollenform, als Bahn oder als Platte, welche dann geeignet im erfindungsgemäßen Verfahren verwendet werden können. Gemäß bestimmten Ausführungsformen wird die erfindungsgemäße, selbstklebende Dampfbremse in Rollenform hergestellt.

Gemäß bestimmten Ausführungsformen befindet sich die mindestens eine Bremsschicht für Feuchtigkeit zwischen der mindestens einen Trägerfolie und der ersten Haftkleberschicht und/oder ist mit der ersten Haftkleberschicht in Kontakt. Dies ist insbesondere vorteilhaft, wenn die Trägerfolie feuchtigkeitsempfindlich ist. Es ergibt sich beispielsweise die Abfolge erste Haftkleberschicht / Bremsschicht gegenüber Feuchtigkeit / Trägerfolie / zweite Haftkleberschicht mit optionaler entfernbarer Abdeckschicht. Es kann hierbei eine Sperrschicht gegenüber Weichmacher beispielsweise zwischen der zweiten Haftkleberschicht und der Trägerfolie, in der Trägerfolie integriert, zwischen der Bremsschicht gegenüber Feuchtigkeit und der Trägerfolie und/oder der ersten Haftkleberschicht und der Bremsschicht gegenüber Feuchtigkeit vorgesehen sein, wobei hierbei auf die Beständigkeit der Materialien der jeweiligen Schicht gegenüber Weichmacher entsprechend Rücksicht genommen werden kann. Auch können mehrere Bremsschichten gegenüber Feuchtigkeit und/oder Trägerfolien und/oder Sperrschichten gegenüber Weichmacher vorgesehen sein. Weiterhin ist auch denkbar, dass die Bremsschicht gegenüber Feuchtigkeit gleichzeitig als Sperrschicht gegenüber Weichmacher wirkt oder dass die Trägerfolie als Bremsschicht gegenüber Feuchtigkeit und/oder Sperrschicht gegenüber Weichmacher wirkt.

Gemäß bestimmten Ausführungsformen kann sich die Bremsschicht gegenüber Feuchtigkeit auch auf oder integriert in der Trägerfolie befinden, auf einer der ersten Haftkleberschicht abgewandten Seite, beispielsweise wenn die Trägerfolie nicht feuchtigkeitsempfindlich ist. Es ergibt sich beispielsweise die Abfolge erste Haftkleberschicht / Trägerfolie / Bremsschicht gegenüber Feuchtigkeit / zweite Haftkleberschicht mit entfernbarer Abdeckschicht; oder erste Haftkleberschicht / Trägerfolie mit integrierter Bremsschicht gegenüber Feuchtigkeit / zweite Haftkleberschicht mit entfernbarer Abdeckschicht. Es kann hierbei eine Sperrschicht gegenüber Weichmacher beispielsweise zwischen der zweiten Haftkleberschicht und der Bremsschicht gegenüber Feuchtigkeit, in der Trägerfolie integriert, zwischen der Bremsschicht gegenüber Feuchtigkeit und der Trägerfolie, und/oder der ersten Haftkleberschicht und der Trägerfolie vorgesehen sein, wobei hierbei ebenfalls auf die Beständigkeit der Materialien der jeweiligen Schicht gegenüber Weichmacher entsprechend Rücksicht genommen werden kann. Auch können wiederum mehrere Bremsschichten gegenüber Feuchtigkeit und/oder Trägerfolien und/oder Sperrschichten gegenüber Weichmacher vorgesehen sein. Weiterhin ist wiederum denkbar, dass die Bremsschicht gegenüber Feuchtigkeit gleichzeitig als Sperrschicht gegenüber Weichmacher wirkt oder dass die Trägerfolie als Bremsschicht gegenüber Feuchtigkeit und/oder Sperrschicht gegenüber Weichmacher wirkt.

Zudem betrifft die vorliegende Erfindung die Verwendung der erfindungsgemäßen, selbstklebenden Dampfbremse zum Verlegen auf einem restfeuchten Untergrund. Hierbei kann die Dampfbremse derart beschaffen sein, wie sie im Zusammenhang mit dem ersten Aspekt der Erfindung beschrieben ist, und umfasst somit auch sämtliche dort dargelegten Ausführungsformen. Zudem kann die erfindungsgemäße, selbstklebende Dampfbremse zum Absperren eines restfeuchten Untergrunds verwendet werden.

Gemäß bestimmten Ausführungsformen ist der restfeuchte Untergrund bei der erfindungsgemäßen Verwendung wie auch im erfindungsgemäßen Verfahren ein restfeuchter Untergrund zum Beispiel auf mineralischer, bevorzugt zementärer, Basis, welcher eine Restfeuchte aufweist, welche über den in SIA 253:2002 (SIA Zurich), S. 12, Punkt 5.1.5 angegebenen Werten liegt.

Je nach zu verlegendem Bodenbelag, gelten Grenzwerte für die Untergrundfeuchtigkeit die unterschritten werden müssen, um die sogenannte Verlegereife zu erreichen. Nach geltenden Regeln des Faches, zum Beispiel gemäß TKB Merkblatt 8, sind für die Belegereife CM Werte ≤ 2.0 CM-% in Zementestrichen einzuhalten für unbeheizte Flächen und ≤ 1.8 CM-% für beheizte Flächen.

Untergründe, zum Beispiel mineralische Untergründe, insbesondere zementäre Untergründe, welche höhere Feuchtigkeitswerte aufweisen, gelten im diesem Sinne als "feucht" bzw. "restfeucht".

Zum Beispiel müssen Zementestriche für die Verlegung von elastischen Bodenbelägen nach geltenden Regeln des Faches, bzw. nach allgemeiner Interpretation der DIN 18365:2006, maximal eine Feuchte von 2.0 CM-% aufweisen.

Gemäß bestimmten Ausführungsformen ist der restfeuchte Untergrund ein restfeuchter Untergrund auf mineralischer Basis mit einer Restfeuchte von mehr als 1,8 CM-%, bevorzugt mehr als 2,0 CM-%, weiter bevorzugt mehr als 2,5 CM-%, noch weiter bevorzugt mehr als 3,0 CM-%, insbesondere bevorzugt gleich oder mehr als 4,0 CM-%, gemessen gemäß SIA 253:2002, Calciumcarbid Methode (CM), S. 16 -17. Bezüglich der Messung kann auch auf die Technische Kommission Boden (TKB) des Industrieverbands Kleben, TKB Merkblatt 8, TKB Merkblatt 16 sowie BEB (Bundesverband Estrich & Belag) Technische Information 1/1998 verwiesen werden. Ein Untergrund auf mineralischer Basis ist hierbei beispielsweise ein Zementestrich und/oder eine Betonplatte, etc. Gemäß bestimmten Ausführungsformen ist der Untergrund beispielsweise nicht basierend auf Linoleum, einem polymeren Material, Metall, Gips und/oder Holz, beispielsweise Parkett, insbesondere nicht basierend auf Linoleum, einem polymeren Material, Metall und/oder Holz.

Gemäß bestimmten Ausführungsformen ist der restfeuchte Untergrund ein restfeuchter Untergrund auf mineralischer Basis mit einer Restfeuchte von maximal 6.0 CM-%, beispielsweise maximal 5.0 CM-%. Es können durchaus auch höher feuchte Zementestriche abgesperrt werden, sofern sie vollständig abgebunden und mechanisch belastbar sind.

In einem weiteren Aspekt betrifft die vorliegende Erfindung ein Verfahren zum Aufbringen einer Bremsschicht für Feuchtigkeit auf einem restfeuchten Untergrund, umfassend:
- Aufbringen der erfindungsgemäßen, oben beschriebenen, selbstklebenden Dampfbremse auf den restfeuchten Untergrund, wobei die erste Haftkleberschicht auf dem restfeuchten Untergrund aufgebracht wird.

So eine entfernbare Abdeckschicht auf der ersten Haftkleberschicht vorgesehen ist, kann diese vor dem Aufbringen der selbstklebenden Dampfbremse oder während des Aufbringens der erfindungsgemäßen selbstklebenden Dampfbremse entfernt werden. So die erfindungsgemäße, selbstklebende Dampfbremse aufgerollt ist und sich eine entfernbare Abdeckschicht zwischen der ersten und zweiten Haftkleberschicht befindet, wird diese bevorzugt von der ersten Haftkleberschicht entfernt, beispielsweise beim Abrollen, wird aber bevorzugt auf der zweiten Haftkleberschicht verbleiben - beispielsweise zum Schutz vor Staub. Nach dem Aufbringen der erfindungsgemäßen selbstklebenden Dampfbremse kann gemäß bestimmten Ausführungsformen beispielsweise ein zu verlegender Bodenbelag abgepasst werden, bevor die entfernbare Abdeckschicht von der zweiten Haftkleberschicht entfernt wird, woraufhin die Abdeckschicht entfernt und der Bodenbelag eingeklebt und angerieben werden kann.

Das Aufbringen auf dem Untergrund entspricht hierbei einem Verlegen, wobei bevorzugt eine Bindung oder Haftung zwischen restfeuchtem Untergrund und erster Haftkleberschicht der selbstklebenden Dampfbremse erfolgt, was zu einer Befestigung der selbstklebenden Dampfbremse auf dem Untergrund führt.

Die erfindungsgemäße, selbstklebende Dampfbremse kann auch im erfindungsgemäßen Verfahren in allen in Verbindung mit dem ersten Aspekt genannten Ausführungsformen in jeglichen möglichen Kombinationen verwendet werden, wobei sich bevorzugte Ausführungsformen im Verfahren - wie auch in der erfindungsgemäßen Verwendung - aus bevorzugten Ausführungsformen der selbstklebenden Dampfbremse ergeben.

Die Definition des restfeuchten Untergrunds entspricht der Definition im Zusammenhang mit der erfindungsgemäßen Verwendung.

Gemäß bestimmten Ausführungsformen ist der restfeuchte Untergrund ein restfeuchter Untergrund auf mineralischer Basis, zum Beispiel zementärer Untergrund, mit einer Restfeuchte von mehr als 1,8 CM-%, bevorzugt mehr als 2,0 CM-%, weiter bevorzugt mehr als 2,5 CM-%, noch weiter bevorzugt mehr als 3,0 CM-%, insbesondere bevorzugt gleich oder mehr als 4,0 CM-%, gemessen gemäß SIA 253:2002.

Gemäß bestimmten Ausführungsformen werden mehrere erfindungsgemäße, selbstklebende Dampfbremsen überlappend aufgebracht. Hierdurch kann ein Feuchtigkeitsdurchtritt an den Überlappungsstellen bzw. Verbindungsstellen vermindert bzw. verhindert werden. Um Unebenheiten zu minimieren kann der Überlapp hierbei möglichst gering ausfallen und/oder möglichst dünn sein.

Gemäß bestimmten Ausführungsformen werden mehrere erfindungsgemäße, selbstklebende Dampfbremsen aneinander angrenzend aufgebracht und nach dem, beispielsweise partiellen, Abziehen der entfernbaren Abdeckschichten an den angrenzenden Stellen mit mindestens einem einseitig und/oder zweiseitig, beispielsweise einseitig, selbstklebenden Band verbunden und/oder es wird auf dem restfeuchten Untergrund unterhalb der angrenzenden Stellen der erfindungsgemäßen, selbstklebenden Dampfbremsen mindestens ein einseitig und/oder zweiseitig, beispielsweise einseitig, selbstklebendes Band aufgebracht und die erfindungsgemäßen, selbstklebenden Dampfbremsen auf das mindestens eine einseitig und/oder zweiseitig selbstklebende Band aufgebracht, sodass sich die aneinander angrenzenden Stellen der erfindungsgemäßen, selbstklebenden Dampfbremsen über dem einseitig und/oder zweiseitig selbstklebenden Band befinden, wobei das mindestens eine einseitig und/oder zweiseitig selbstklebende Band mindestens eine Bremsschicht für Feuchtigkeit aufweist. Auch in solchen Ausführungsformen ist es bevorzugt, dass die Fläche und/oder Dicke des selbstklebenden Bands möglichst gering ist, um Unebenheiten zu minimieren.

Ein aneinander angrenzendes Aufbringen ist hierbei beispielsweise ein Anbringen auf Stoß unter Vermeidung von Überlappungen, wobei sich hierbei Fugen bilden können, durch welche Restfeuchte des Untergrunds dringen kann. Um dies zu verhindern, werden die einseitig oder zweiseitig selbstklebenden Bänder verwendet. Die einseitig und/oder zweiseitig selbstklebenden Bänder weisen bevorzugt eine Haftkleberschicht auf, welche auf den restfeuchten Untergrund und/oder die erfindungsgemäße, selbstklebende Dampfbremse aufgebracht wird, wobei diese Haftkleberschicht hinsichtlich ihres Materials bevorzugt der ersten und/oder zweiten Haftkleberschicht der erfindungsgemäßen, selbstklebenden Dampfbremse entspricht.

So ein einseitig selbstklebendes Band auf den restfeuchten Untergrund aufgebracht wird und darüber die erfindungsgemäße, selbstklebende Dampfbremse, weist das einseitig selbstklebende Band bevorzugt als Haftkleberschicht eine solche auf, welche der ersten Haftkleberschicht der erfindungsgemäßen, selbstklebenden Dampfbremse entspricht, wobei diese Haftkleberschicht bevorzugt auf den restfeuchten Untergrund aufgebracht wird. So ein einseitig selbstklebendes Band auf die erfindungsgemäße, selbstklebende Dampfbremse aufgebracht wird, entspricht die Haftkleberschicht bevorzugt der zweiten Haftkleberschicht der erfindungsgemäßen selbstklebenden Dampfbremse, wobei bevorzugt das einseitig selbstklebende Band mit der nichtklebenden Seite auf die erfindungsgemäße, selbstklebende Dampfbremse aufgebracht wird, sodass die Haftkleberschicht einem zu verlegenden Bodenbelag zugewandt ist. Bei einem zweiseitig selbstklebendem Band entspricht gemäß bestimmten Ausführungsformen analog die eine Haftkleberschicht der ersten Haftkleberschicht, welche bevorzugt auf den restfeuchten Untergrund aufgebracht wird, und/oder die andere Haftkleberschicht entspricht der zweiten Haftkleberschicht der erfindungsgemäßen, selbstklebenden Dampfbremse und das selbstklebende Band wird bevorzugt derart auf die erfindungsgemäße, selbstklebende Dampfbremse aufgebracht, dass diese - andere - Haftkleberschicht einem zu verlegenden Bodenbelag gegenüber liegt.

Bevorzugt umfassen die einseitig und/oder zweiseitig selbstklebenden Bänder auch mindestens eine Bremsschicht gegenüber Feuchtigkeit, welche denen der erfindungsgemäßen, selbstklebenden Dampfbremse entspricht. Sie können darüber hinaus auch mindestens eine Sperrschicht gegenüber Weichmachern enthalten.

Gemäß bestimmten Ausführungsformen wird zur Materialersparnis das einseitig oder zweiseitig selbstklebende Band nur unterhalb der angrenzenden Stellen oder nur oberhalb der erfindungsgemäßen, selbstklebenden Dampfbremsen aufgebracht, wobei es natürlich beim Aufbringen von mehr als zwei erfindungsgemäßen, selbstklebenden Dampfbremsen auch möglich ist, dass das selbstklebende Band bei einer oder mehr aneinander angrenzenden Stellen unterhalb der erfindungsgemäßen, selbstklebenden Dampfbremsen angebracht wird und an einer oder mehr anderen aneinander angrenzenden Stellen zur Verbindung der erfindungsgemäßen, selbstklebenden Dampfbremsen auf diesen bzw. oberhalb von diesen angebracht wird.

Es ist erfindungsgemäß nicht ausgeschlossen, dass sowohl einseitig oder zweiseitig selbstklebende Bänder verwendet werden, zum Beispiel oberhalb und/oder unterhalb der erfindungsgemäßen, selbstklebenden Dampfbremsen, als auch zudem noch ein Überlapp der erfindungsgemäßen, selbstklebenden Dampfbremsen stattfindet, wobei dies jedoch im Hinblick auf die Vermeidung von größeren Unebenheiten und einem Mehrverbrauch an Material nicht unbedingt bevorzugt ist. Bei Verlegen der erfindungsgemäßen, selbstklebenden Dampfbremse auf Teilflächen bzw. Patches ist es ggf. auch möglich, auf einseitig oder zweiseitig selbstklebende Bänder zu verzichten. Insbesondere werden einseitig selbstklebende Bänder bei einer Restfeuchte des Untergrunds von 2,5 CM-% oder mehr, bevorzugt 3,0 CM-% oder mehr, verwendet und/oder die erfindungsgemäßen, selbstklebenden Dampfbremsen überlappend aufgebracht.

Gemäß bestimmten Ausführungsformen weist die mindestens Bremsschicht für Feuchtigkeit des mindestens einen einseitig und/oder zweiseitig selbstklebenden Bands einen s_{D}-Wert, gemessen analog ASTM E 398-13, von mindestens 50 m, bevorzugt mindestens 100 m, weiter bevorzugt mindestens 200 m auf.

Gemäß bestimmten Ausführungsformen ergibt sich an mit Bändern abgedichteten aneinander angrenzenden Stellen, beispielsweise Fugen, von zwei oder mehr erfindungsgemäßen, selbstklebenden Dampfbremsen jeweils ein S_{D}-Wert, gemessen analog ASTM E 398-13, von mindestens 20 m, bevorzugt mindestens 50 m, weiter bevorzugt mindestens 100 m.

Gemäß bestimmten Ausführungsformen umfasst das erfindungsgemäße Verfahren ein Abziehen der entfernbaren Abdeckschicht auf der zweiten Haftkleberschicht nach dem Aufbringen der selbstklebenden Dampfbremse auf dem Untergrund sowie gemäß bestimmten Ausführungsformen ein Aufbringen eines Bodenbelags auf die zweite Haftkleberschicht, wobei der Bodenbelag zuvor abgepasst werden kann. Es ist auch nicht ausgeschlossen, dass ein Bodenbelag aufgebracht wird und zeitgleich oder kurz danach die entfernbare Abdeckschicht entfernt wird.

Für das Verfahren ist es bevorzugt, dass der Untergrund eine ausreichende Planheit und ausreichend geringe Rauigkeit für einen aufzunehmenden Bodenbelag aufweist. Gemäß bestimmten Ausführungsformen wird daher der Untergrund vor dem Aufbringen der erfindungsgemäßen, selbstklebenden Dampfbremse beispielsweise durch Planschaben und/oder durch Planschleifen und/oder mit einer feuchtigkeitsbeständigen Spachtelmasse vorbereitet, welche über die Feuchtigkeitsbeständigkeit hinaus nicht beschränkt ist. Die Feuchtigkeitsbeständigkeit kann hierbei wiederum analog zur ersten Haftkleberschicht verstanden werden. Das heißt, dass die Festigkeit der eingesetzten Spachtelmasse unter andauernder Feuchtigkeitseinwirkung die allgemeinen Anforderungen an die Festigkeit von Spachtelmassen erfüllt bzw. deren Festigkeit unter andauernd einwirkender Feuchtigkeit nicht nachlässt.

Die Vorgaben zur Planheit bzw. Ebenheit können beispielsweise den Regeln des Fachs, zum Beispiel gemäss TKB Merkblatt 8, bzw. den folgenden Normen, zum Beispiel DIN 18202:2005, Tabelle 3, Zeilen 3 und 4, zum Beispiel DIN 18365:2012, Absatz 3.2 und 3.3, etc. entnommen werden. Die Ebenheit kann zum Beispiel mittels der Vorgaben der DIN 18202:2005 gemessen werden. Gemäss TKB Merkblatt 8, Punkt 4.3 sind diese Grenzwerte jedoch nicht immer ausreichend, sodass ggf. die Vorgaben für die Ebenheit und Planheit vom jeweiligen Belagshersteller zu beachten sind.

Gemäß bestimmten Ausführungsformen weist der restfeuchte Untergrund eine Ebenheit auf, welche mindestens den Anforderungen der DIN 18202:2005, Tabelle 3, Zeile 3, bevorzugt Zeile 4, entspricht. Die Werte sind hierbei auszugsweise in der folgenden Tabelle 1 gegeben.

**Tabelle 1: Auszug aus DIN 18202:2005-10, Tabelle 3, Zeile 3**

| Zeile | Stichmaße als Grenzwerte in mm bei Messpunktabständen in m bis | | | | | |
|---|---|---|---|---|---|---|
| | 0,1 | 1 | 4 | 10 | 15* | [m] |
| 3 | 2 | 4 | 10 | 12 | 15 | [mm] |
| 4 | 1 | 3 | 9 | 12 | 15 | [mm] |

| | | | | | | |
|---|---|---|---|---|---|---|
| * Die Grenzwerte für Ebenheitsabweichungen dieser Spalte gelten auch für Messpunktabstände über 15 m | | | | | | |

Als Bodenbeläge, die auf die erfindungsgemäße, selbstklebende Dampfbremse aufgebracht werden können, sind beispielsweise Kautschukbodenbeläge, homogene PVC-Bodenbeläge, heterogene PVC-Bodenbeläge, Designbeläge, CV-Bodenbeläge (Cushioned Vinyl, geschäumte Bodenbeläge aus PVC), Korkbeläge, Linoleumbeläge, Enomerbeläge, Flotex, evtl. getuftete Textilbeläge mit Vliesrücken, synthetischem Doppelrücken (SDR), Schaum- oder Textilrücken sowie Kugelgarn, PP-Nadelvliesbeläge wie Finett 7, etc. möglich.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss anhand einiger beispielhafter Ausführungsformen dargestellt, die diese jedoch nicht einschränken.

### Vorversuche

Es wurden verschiedene Prüfkörper mit identischer Trägerfolie und verschiedenen ersten Haftkleberschichten bzw. Klebstoffen mit einer Klebstoffauftragsmasse von 10 - 200 g/m² hergestellt.

Als Klebstoffe wurden ein dispersionsbasiertes Acrylat 1, ein acrylischer Hotmelt als Acrylat 2, ein weiterer acrylischer Hotmelt als Acrylat 3, ein SBS-Klebstoff als SBS 1, ein SBS Hotmelt als SBS 2 und ein weiterer SBS Hotmelt als SBS 3 verwendet.

Die Prüfkörper wurden auf eine feuchtigkeitsgesättigte Faserzementplatte aufgebracht und nach dem in DIN EN 1939:2003 beschriebenen Verfahren mit dieser verbunden. Nach 15 Minuten erfolgte eine Messung des Schälwiderstands nach dem in DIN EN 1939:2003 beschriebenen Verfahren.

Hiermit kann ein restfeuchter Untergrund simuliert werden, welcher beim tatsächlichen Verlegen der erfindungsgemäßen, selbstklebenden Dampfbremse mit dieser in Kontakt kommt und in Verbindung tritt. Auf Datenblättern werden zumeist Klebkräfte auf Normuntergründen wie zum Beispiel Stahl (V2A) oder Glas angegeben. Es hat sich gezeigt, dass die auf den Datenblättern angegebenen Messwerte lediglich als Ausgangspunkt für eine grobe Klebstoffselektion dienen können und diese dann spezifisch geprüft werden müssen.

Als Faserzementplatte wurde hierbei eine handelsübliche, unbehandelte Faserzementplatte verwendet.

Zum Vergleich erfolgte zudem eine Messung des Schälwiderstands nach dem in DIN EN 1939:2003 beschriebenen Verfahren nach Aufbringen der Prüfkörper auf Stahl und Glas sowie eine trockene Faserzementplatte und Verbinden mit diesen, ebenfalls nach 15 Minuten. Die Schälprüfung erfolgte bei Normklima.

Zudem wurden so aufgetragene und verbundene Prüfkörper auf den feuchtigkeitsgesättigten Faserzementplatten für 28 Tage bei 50°C unter Erhalt der Feuchtigkeit gealtert und im Anschluss wiederum der Schälwiderstand nach dem in DIN EN 1939:2003 beschriebenen Verfahren gemessen.

Mit einem pH-Streifen wurde zudem der pH der feuchtigkeitsgesättigten Faserzementplatte gemäß ASTM F710-11, Absatz 5.2 gemessen, und es ergab sich ein pH von ca. 13,0.

Während auf den trockenen Untergründen Stahl und Glas sowie Faserzement oftmals ein ähnliches Verhalten der Klebstoffe beobachtet wird, so wird auf feuchten Untergründen überaschenderweise oft ein ganz anderes Verhalten festgestellt. Die Messwerte der Schälprüfungen analog DIN EN 1939:2003 nach 15 Minuten sind in Tabelle 2 gezeigt.

**Tabelle 2: Messwerte des Schälwiderstands nach 15 Minuten**

| | Klebstoff | DIN Stahl [N/25mm] | Glas [N/25mm] | Faser Zement trocken [N/25mm] | Faserzement feucht [N/25mm] |
|---|---|---|---|---|---|
| 1 | Acrylat 1 | 6.9 | 9.3 | 9.1 | 0.07 |
| 2 | Acrylat 2 | 11.1 | 15.7 | 21.9 | 0.27 |
| 3 | Acrylat 3 | 41.6 | 62.2 | 39.5 | 4.00 |
| 4 | SBS 1 | 43.5 | 44.7 | 13.9 | 0.15 |
| 5 | SBS 2 | 35.6 | 42.4 | 31.9 | 7.97 |
| 6 | SBS 3 | 17.8 | 19.6 | 18.0 | 7.89 |

Für unterschiedliche, trockene Untergründe können für einen Klebstoff allenfalls Analogieschlüsse für die Klebeeigenschaften von Untergrund zu Untergrund gezogen werden. Die Schälkraftmessungen auf normierten Untergründen lassen jedoch keine Schlüsse auf das Verhalten der Klebstoffe auf restfeuchten Untergründen zu, wie aus Tabelle 2 ersichtlich.

In Tabelle 3 sind die Ergebnisse der Schälprüfungen für die Prüfkörper auf feuchtigkeitsgesättigten Faserzementplatten nach 15 Minuten Einwirkdauer und nach 28 Tagen Feuchtlagerung bei 50°C aufgeführt, wobei sich analoge Werte auch nach 41 Tagen ergaben. Beständige Haftklebstoffschichten weisen hierbei bevorzugt keinen Abfall der Klebekräfte auf.

**Tabelle 3**

| | Klebstoff | Faserzement Feucht 15' [N/25mm] | Faserzement Feucht 28 Tage 50°C [N/25mm] |
|---|---|---|---|
| 1 | Acrylat 1 | 0.07 | 2.3 |
| 2 | Acrylat 2 | 0.27 | 9.0 |
| 3 | Acrylat 3 | 4.00 | 0.67 |
| 4 | SBS 1 | 0.15 | 7.2 |
| 5 | SBS 2 | 7.97 | 17.2 |
| 6 | SBS 3 | 7.89 | 0.86 |

| | | | |
|---|---|---|---|
| 15' = 15 Minuten | | | |

Welche Klebstoffe für eine Projekt funktionieren und welche nicht, muss jeweils anhand der Projektanforderungen beurteilt werden. Als Mindestanforderungen sollen Schälkräfte angelehnt an die DIN EN 1939:2003 von mindestens 3.0 N/25mm in allen relevanten Bedingungen erreicht werden. Dies umfasst beispielsweise Schälkräfte auf sowohl trockener als auch feuchter Faserzementplatte, als auch auf feuchter Faserzementplatte nach beschleunigter Alterung, zumindest nach 20 Tagen, bevorzugt 28 Tagen, weiter bevorzugt 41 Tagen bei 50°C. Zudem sollte bevorzugt nach beschleunigter Alterung kein Schälkraftabfall gegenüber 15 Minuten auftreten.

Gemäß diesen Anforderungen und aus den hier aufgestellten Messdaten ist erkennbar, dass Acrylat 1 sowohl auf feuchter Faserzementplatte sowohl nach 15 Minuten als auch nach beschleunigter Alterung keine ausreichende Haftung zustande bringt. Acrylat 2 und SBS 1 haben eine zu geringe Anfangshaftung auf der feuchten Faserzementplatte und scheitern trotz guten Werten nach beschleunigter Alterung. Acrylat 3 und SBS 3 weisen ausreichende Kurzzeithaftungswerte auf der feuchten Faserzementplatte auf, sind jedoch zu wenig beständig in feucht, alkalischem Milieu. Ausreichende Eigenschaften weist in dieser Auswahl SBS 2 auf, mit ausreichenden Haftungswerten auf feuchter Faserzementplatte sowohl nach 15 Minuten als auch nach beschleunigter Alterung nach 20 Tagen, bevorzugt 28 Tagen, weiter bevorzugt 41 Tagen bei 50°C in alkalisch feuchtem Milieu sowie auf trockenen Untergründen.

### Beispiel 1

Mit SBS 2 als erste Haftkleberschicht kann nunmehr eine erfindungsgemäße, selbstklebende Dampfbremse hergestellt werden, welche auf einer Oberseite eines Folienträgers aus Polyethylen, welcher mit einer zum Beispiel 50 nm dicken Aluminiumschicht bedampft ist, mit einer Haftkleberschicht auf Acrylat versehen ist, welche mit einer entfernbaren Abdeckschicht bedeckt ist, und auf der anderen Seite des Folienträgers mit der ersten Haftkleberschicht versehen ist.

Es ergibt sich eine doppelseitig selbstklebende Dampfbremse, welche auf oberflächlich trockene, restfeuchte, zementäre Untergründe geklebt und auf welche direkt ein Bodenbelag geklebt werden kann. Der Träger enthält sowohl eine Feuchtigkeits- als auch eine Weichmachersperre, der Klebstoff der offenen Seite, also die erste Haftkleberschicht, ist für die Verklebung auf dem restfeuchten Untergrund ausgelegt und der Klebstoff der geschlossenen Seite, also die zweite Haftkleberschicht, ist für die direkte Klebung von textilen Bodenbelägen und/oder elastischen Bodenbelägen ausgelegt.

Die selbstklebende Dampfbremse kann zu einer Rolle gewickelt werden. Die Wicklung erfolgt bevorzugt so, dass die selbstklebende, offene Seite auf der Rolle innen liegt und nach dem Ausrollen mit dem Untergrund verbunden wird und die mit dem Bodenbelag zu verbindende Seite oben liegt. Hierzu ist die zweite Haftkleberschicht beispielsweise mit einem Papierliner als entfernbare Abdeckschicht abgedeckt.

Im System kann zudem ein zugehöriges Abdeckband mit verwendet werden, welches für eine flächige Abdichtung dienen kann, wobei anstelle dessen auch mit einer Überlappung gearbeitet werden kann.

Die doppelseitig selbstklebende Dampfbremse kann beispielsweise zum direkten Kleben von elastischen und textilen Bodenbelägen - ohne erforderliche weitere Materialien - auf neuen, restfeuchten Untergründen im Innenbereich verwendet werden, wobei auf eine vorgängige Wasserdampfsperre verzichtet werden kann.

Wenn eine Dampfsperre benötigt wird, so wird bevorzugt mit Überlappungen und/oder mit einem Abdeckband gearbeitet, damit dichte Flächen entstehen.

Die erfindungsgemäße, selbstklebende Dampfbremse kann beispielsweise auf rohe, zementäre, restfeuchte, wasserfeste, oberflächlich trockene, tragfähige, staub-, schmutz- und fettfreie Untergründe, zum Beispiel Zementestrich, Spachtelmasse, etc., welche bevorzugt geschliffen sind, aufgebracht werden.

Das Austrocknen von Betonböden, Verbundestrichen oder schwimmenden Estrichen im Hochbau benötigt viel Zeit. Ein Estrich benötigt oft mehrere Wochen Trockenzeit bis dieser verlegereif ist, um eine Spachtelmasse aufnehmen zu können, auf welche in der Folge ein elastischer Bodenbelag geklebt werden kann. Betonböden brauchen oft mehrere Monate Trockenzeit. Aufgrund des hohen Zeitdrucks wird oft mit Dampfbremsen gearbeitet.

Die heute praktizierten Verfahren sind zeit- und arbeitsaufwändig und die verwendeten Materialien sind oftmals aus Sicht des Arbeitsschutzes bedenklich. Oftmals sind für einen geeigneten Aufbau mehrere Tage für die Arbeiten notwendig.

Mit den erfindungsgemäßen, selbstklebenden Dampfbremsen kann ein restfeuchter Untergrund, bevorzugt auf zementärer Basis, schnell abgedichtet werden und für die weitere Bearbeitung bereitgestellt werden. Auf die erfindungsgemäßen, selbstklebenden Dampfbremsen können direkt Bodenbeläge aufgebracht werden. Die verlegten Bodenbeläge sind sofort voll belastbar.

## Patentansprüche

1. Selbstklebende Dampfbremse, umfassend:
- mindestens eine Trägerfolie;
- mindestens eine Bremsschicht für Feuchtigkeit;
- eine erste Haftkleberschicht, welche gegenüber Feuchtigkeit beständig ist und sich auf einer der Umgebung zugewandten Seite der selbstklebenden Dampfbremse befindet;
- eine zweite Haftkleberschicht, welche sich auf einer der ersten Haftkleberschicht gegenüberliegenden Seite der Trägerfolie befindet; und
- eine entfernbare Abdeckschicht, welche auf der zweiten Haftkleberschicht auf einer der Umgebung zugewandten Seite der selbstklebenden Dampfbremse gegenüber der Trägerfolie aufgebracht ist,
wobei die erste Haftkleberschicht nach Auftragung auf eine feuchtigkeitsgesättigte Faserzementplatte einen Schälwiderstand gemessen analog DIN EN 1939:2003 von
≥ 3.0 N/25 mm aufweist, und
wobei die erste Haftkleberschicht nach beschleunigter Alterung auf einer feuchtigkeitsgesättigten Faserzementplatte für 20 Tage bei 50°C unter Erhalt der Feuchtigkeit einen Schälwiderstand gemessen analog DIN EN 1939:2003 von ≥ 3.0 N/25 mm aufweist.

2. Selbstklebende Dampfbremse nach Anspruch 1, wobei die Bremsschicht für Feuchtigkeit einen S_{D}-Wert, gemessen nach ASTM E 398-13, von mindestens 50 m aufweist.

3. Selbstklebende Dampfbremse nach Anspruch 1 oder 2, weiter umfassend mindestens eine Sperrschicht, welche für Weichmacher undurchlässig ist.

4. Selbstklebende Dampfbremse nach einem der vorgehenden Ansprüche, wobei die mindestens eine Bremsschicht für Feuchtigkeit und/oder die optionale, mindestens eine Sperrschicht, welche für Weichmacher undurchlässig ist, in die Trägerfolie integriert ist.

5. Selbstklebende Dampfbremse nach einem der vorgehenden Ansprüche, wobei die erste Haftkleberschicht gegenüber alkalischer Feuchtigkeit bei einem pH von gleich oder mehr als 8,0 und gleich oder weniger als 13,5 beständig ist.

6. Selbstklebende Dampfbremse nach einem der vorgehenden Ansprüche, wobei die mindestens eine Bremsschicht für Feuchtigkeit sich zwischen der mindestens einen Trägerfolie und der zweiten Haftkleberschicht befindet und/oder mit der zweiten Haftkleberschicht in Kontakt ist.

7. Selbstklebende Dampfbremse nach einem der vorgehenden Ansprüche, wobei die zweite Haftkleberschicht eine Klebstoffauftragsmasse von 10 - 200 g/m² aufweist.

8. Selbstklebende Dampfbremse nach einem der vorgehenden Ansprüche, wobei die erste Haftkleberschicht eine Klebstoffauftragsmasse von 10 - 100 g/m² aufweist.

9. Verwendung einer selbstklebenden Dampfbremse nach einem der Ansprüche 1 bis 8 zum Verlegen auf einem restfeuchten Untergrund.

10. Verwendung nach Anspruch 9, wobei der restfeuchte Untergrund ein restfeuchter Untergrund auf mineralischer Basis mit einer Restfeuchte von mehr als 1,8 CM-%, gemessen gemäß SIA 253:2002, ist.

11. Verfahren zum Aufbringen einer Bremsschicht für Feuchtigkeit auf einem restfeuchten Untergrund, umfassend:
- Aufbringen einer selbstklebenden Dampfbremse nach einem der Ansprüche 1 bis 8 auf den restfeuchten Untergrund.

12. Verfahren nach Anspruch 11, wobei mehrere selbstklebende Dampfbremsen nach einem der Ansprüche 1 bis 8 überlappend aufgebracht werden.

13. Verfahren nach Anspruch 11, wobei mehrere selbstklebende Dampfbremsen nach einem der Ansprüche 1 bis 8 aneinander angrenzend aufgebracht werden und nach dem Abziehen der entfernbaren Abdeckschicht an den angrenzenden Stellen mit mindestens einem einseitig und/oder zweiseitig selbstklebenden Band verbunden werden und/oder auf dem restfeuchten Untergrund unterhalb der angrenzenden Stellen der selbstklebenden Dampfbremsen nach einem der Ansprüche 1 bis 8 mindestens ein einseitig und/oder zweiseitig selbstklebendes Band aufgebracht wird und die selbstklebenden Dampfbremsen nach einem der Ansprüche 1 bis 8 auf das mindestens eine einseitig und/oder zweiseitig selbstklebende Band aufgebracht werden, wobei das mindestens eine einseitig und/oder zweiseitig selbstklebende Band mindestens eine Bremsschicht für Feuchtigkeit aufweist.

14. Verfahren nach Anspruch 13, wobei die Bremsschicht für Feuchtigkeit des mindestens einen einseitig und/oder zweiseitig selbstklebenden Bands einen s_{D}-Wert, gemessen analog ASTM E 398-13, von mindestens 50 m aufweist.

15. Verfahren nach einem der Ansprüche 11 bis 14, weiter umfassend ein Abziehen der entfernbaren Abdeckschicht nach dem Aufbringen der selbstklebenden Dampfbremse sowie optional ein Aufbringen eines Bodenbelags auf die zweite Haftkleberschicht.
